# EUROPEAN PATENT SPECIFICATION

(11) **EP 0 323 080 B1**
(45) Date of publication and mention of the grant of the patent: **16.02.1994**
(21) Application number: 88311913.3
(22) Date of filing: 16.12.1988
(51) Int. Cl.: G06F 13/16

(54) **Multiprocessor memory access control system**
Speicherzugriffkontrollsystem für Mehrprozessorsystem
Système de contrôle d'accès mémoire pour dispositif multiprocesseur

(30) Priority: 24.12.1987 JP 328259/87
(43) Date of publication of application: 05.07.1989
(73) Proprietor: FUJITSU LIMITED, Kawasaki-shi, Kanagawa 211 (JP)
(72) Inventor: Uchida, Nobuo, Suginami-ku Tokyo 168 (JP); Kuroda, Yasuhiro, Kawasaki-shi Kanagawa 211 (JP); Nakatani, Shoji, Kawasaki-shi Kanagawa 211 (JP)
(74) Representative: Billington, Lawrence Emlyn

(56) References cited:
- EP-A- 0 309 330
- IBM TECHNICAL DISCLOSURE BULLETIN, vol. 25, no. 1, June 1982, pages 194-198, Armonk, New York, USA; K.G. Tan: "Solution for shared/private memory in multisystem configuration"
- PATENT ABSTRACTS OF JAPAN, vol. 11, no. 97 (P-560), 26 March 1987;
- PATENT ABSTRACTS OF JAPAN, vol. 6, no. 206 (P-149)(1084), 19 October 1982;

## Description

The present invention relates to a multiprocessor memory access control system.

There is an increasing need for computers having more functions and higher speeds. For example, even in a vector processing unit, which calculates matrices, a multiprocessor system is usually used, and when a plurality of vector processing units or the like are operated simultaneously with a common main storage unit, the system must have a sufficient throughput. In a multiprocessor system, usually a plurality of main storage units and a plurality of information processing units, i.e., processing elements, are connected to the main storage control units, and a plurality of information processing units have access to a plurality of main storage units.

When a system having one main storage control unit is expanded to become a multiprocessor system having a plurality of main storage control units, hitherto one main storage control unit controls only predetermined main storage units and the other main storage control units control all of the other main storage units except for the above predetermined main storage units.

When a processing unit requires access to a main storage unit, first the processing unit transmits a request to a main storage control unit to which the processing unit is connected, through a bus, and then the main storage control unit receiving the request determines whether the request is for a main storage unit which it controls, or for the other main storage control units which it does not control. If the main storage unit is one which is controlled by the main storage control unit, the main storage control unit accesses that main storage unit, but if the main storage unit is controlled by another main storage control unit, the main storage control unit transmits the request to the other main storage control unit, and the other main storage control unit carries out the access processing.

Namely, predetermined main storage units are connected to a main storage control unit, and thus each main storage control unit independently has access to main storage units which it controls (hereinafter, local units). When access is required to main storage units not controlled by the main storage control (hereinafter, remote units), another main storage control unit connected to the main storage units carries out the access processing.

The above-mentioned system can be used in many cases if a processing unit processes one piece of data per one instruction, as in a usual general computer, but if a processing unit wherein the unit processes many pieces of data per one instruction, as in a vector processing unit, is applied to the system, a request priority acquisition state becomes unbalanced, since the system must maintain the order of data within that one instruction. Accordingly, a main storage control unit must be provided with a table for managing a state of another main storage control unit, and a problem arises in that a delayed control of the signals becomes difficult.

Namely, in a usual general purpose computer, for example, an address allocation for a main storage unit is executed in a 4 k bytes group using a page interleave, but in a vector processing unit, a high throughput of 4 x 8 bytes in each cycle is required, and thus an 8 bytes interleave is applied. In addition, since 4 elements of data are processed in each cycle, a simultaneous data transmission and reception from the main storage unit becomes necessary. In this case, in a data fetch, the vector processing unit must fetch 4 x 8 bytes of data in parallel to a vector register therein from main storage units, and therefore a reduction of the difference in the data transmission time becomes necessary. Further, priority acquisition signals must be transmitted between the main storage control units, and remote priority acquisition information must be controlled by providing tables or the like. Accordingly, the control becomes extremely complicated and the performance level is lowered.

The present invention is intended to address the above problems.

Note: As a publication relating to this invention, please refer to United States Patent Publication No. 4,718,006(EP-A-0 147 295).

IBM Technical Disclosure Bulletin, Vol. 25, No. 1, June 1982, pages 194-198 discloses a system according to the preamble of accompanying claim 1.

JP-A-61 248153 by the present applicant discloses a memory access controlling system in a multiprocessor system including two memory control units, connected to respective storage units. Each memory control unit includes a priority controlling circuit responsive to access requests from both local and remote processors.

JP-A-57-113166, also by the present applicant, discloses a data processing system including a modular memory, a single memory access controller, and a single vector processor.

According to the present invention, there is provided a multiprocessor memory access control system comprising a plurality of main storage control units, one of which is a first main storage control unit, and another of which is a second main storage control unit; a plurality of processing units, comprising one or more first processing units that are connected to the first main storage control unit, and one or more second processing units that are connected to the second main storage control unit; and at least one main storage unit commonly connected to each of the main storage control units; wherein an access request from a said first processing unit is carried out through the first main storage control unit by accessing a selected said main storage unit from the first main storage control unit, and an access request from a said second processing unit is carried out through the second main storage control unit by accessing a selected said main storage unit from the second main storage control unit;
characterised by:-
a priority order determination circuit in each main storage control unit for determining the access priority order to the or each main storage unit;
the priority order determination circuits of both main storage control units receiving every said access request and checking the same synchronously to determine a priority of the access requests, and each main storage control unit carrying out an access request received from one of its own processing units only when permitted by its priority order determination circuit, thereby avoiding conflicting accesses.

In other words, each processing unit is connected to the at least one main storage unit through one of the main storage control units, and when one of the processing units transmits a request for access to a main storage unit, the processing unit transmits the request to the main storage control unit connected thereto but simultaneously transmits the request to the other main storage control unit, through the control bus. Further, the main storage control unit connected to the processing unit receives requests from all processing units connected to the other main storage control unit. Both priority order determination circuits operate synchronously when receiving a request from one of the processing units, and control the necessary busy checks. Data is transmitted between one of the processing units and the selected main storage unit through only the main storage control unit to which the processing unit is connected.

An embodiment of the present invention may thus provide a multiprocessor control system wherein the control of main storage units is synchronously carried among a plurality of main storage control units, and high throughput processor units having access to the main storage units are incorporated, to provide a multiprocessor system.

Reference is made, by way of example, to the accompanying drawings in which:-
Figure 1 is a block circuit diagram of a general multiprocessor memory access control system;
Fig. 2 is a block circuit diagram of an embodiment of the present invention;
Fig. 3 is a diagram showing a format of a request in the embodiment of Fig. 2;
Fig. 4 is a circuit diagram showing an example of a priority order determination circuit in Fig. 2;
Figs. 5A and 5B are a flowchart of the control carried out by a main priority order control circuit shown in Fig. 4; and
Fig. 6 is a block circuit diagram showing a concrete example of the embodiment of Fig. 2.

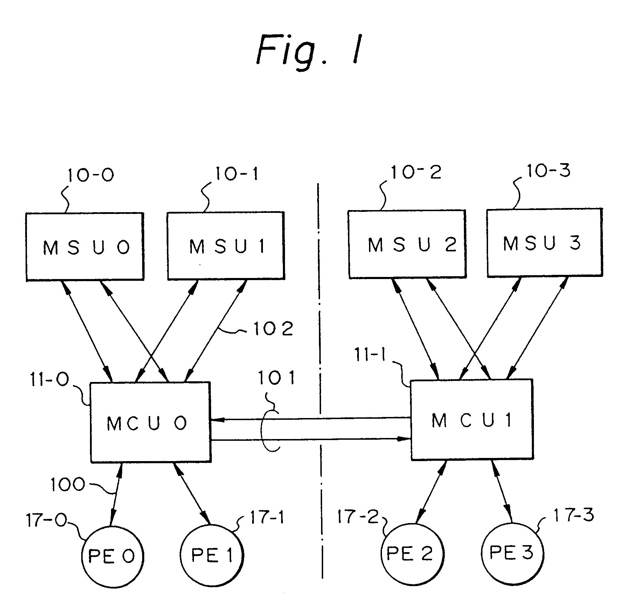

Prior to the explanation of the preferred embodiments, a known multiprocessor memory access control system is explained with reference to Fig. 1.

In Fig. 1, reference numerals 10-0 to 10-3 denote main storage units (MSU), 11-0 and 11-1 denote main storage control units (MCU), 17-0 to 17-3 denote processing units (PE), 100 denotes request and data buses between the PE's and MCU's, 101 denotes a request information transmission bus between the MCU's, and 102 denotes request and data buses between the MSU's and the MCU's.

The MCU 11-0 controls only the MSU's 10-0 and 10-1 and the MCU 11-1 controls only the MSU's 10-2 and 10-3.

When one of the PE's accesses an MSU, the PE transmits a request to the MCU to which the PE is connected, through the bus 100. Upon receiving the request, the MCU determines whether the request is for a local MSU (if the main storage control unit is MCU0, the local main storage units are MSU0 and MSU1) or for a remote MSU (if the main storage control unit is MCU0, the remote main storage units are MSU2 and MSU3). If the request is for a local MSU, the MCU accesses that local MSU, but if the request is for a remote MSU, the MCU transmits the request to another MCU through the bus 101, and the remote MCU accesses the required remote MSU.

Namely, each MCU has independent access to local MSU's, and when access is required to a remote MSU, each MSU transfers the process to another MCU.

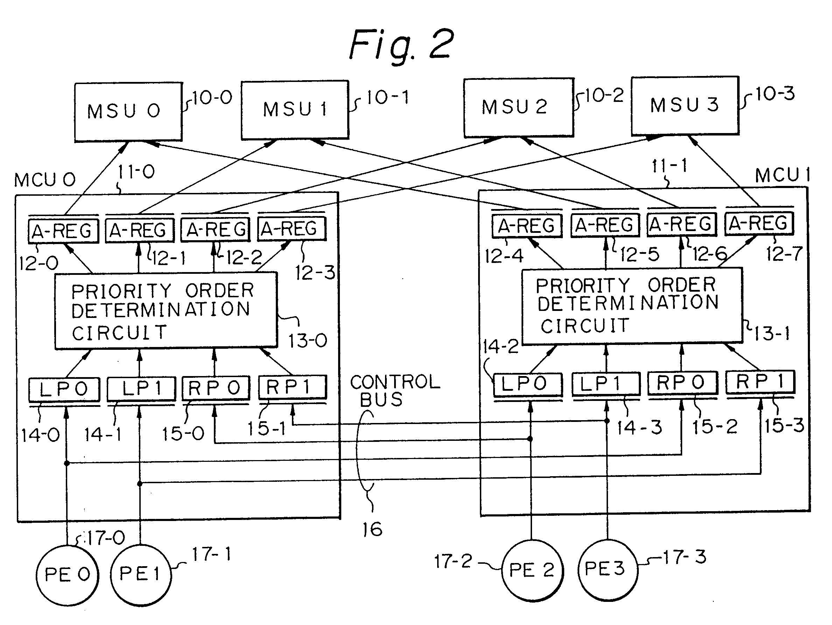

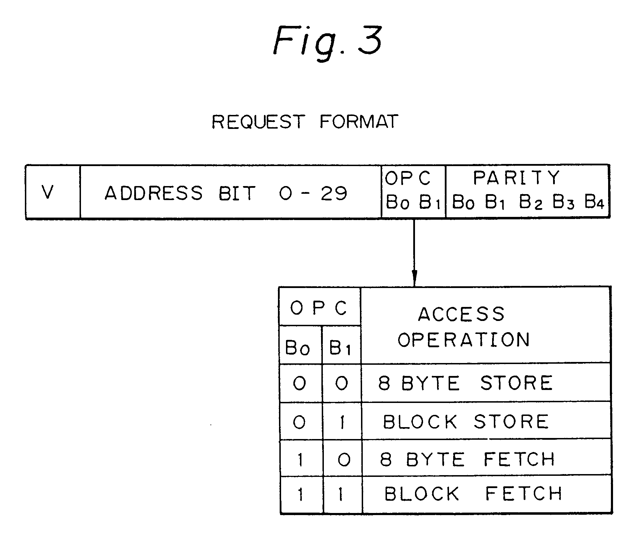

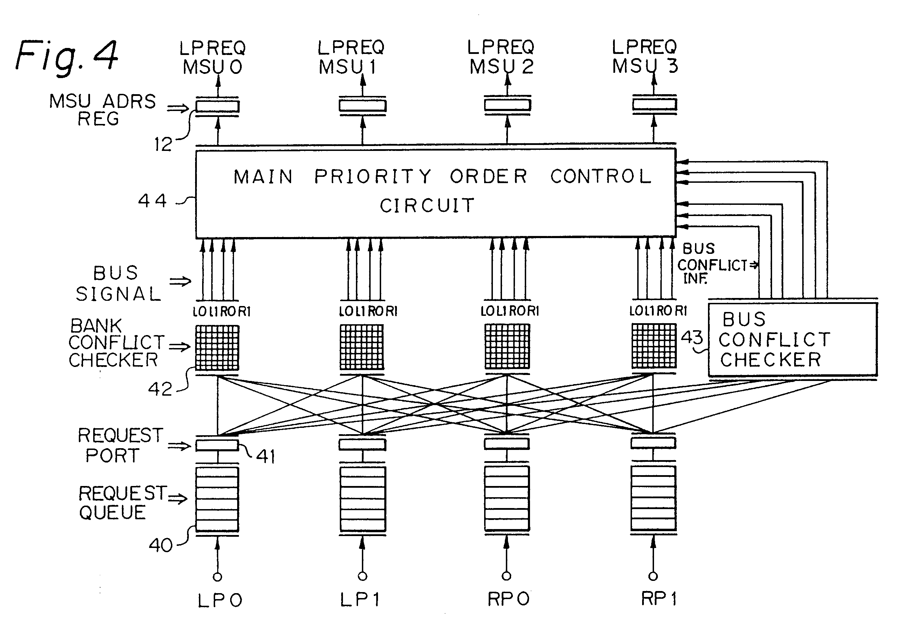

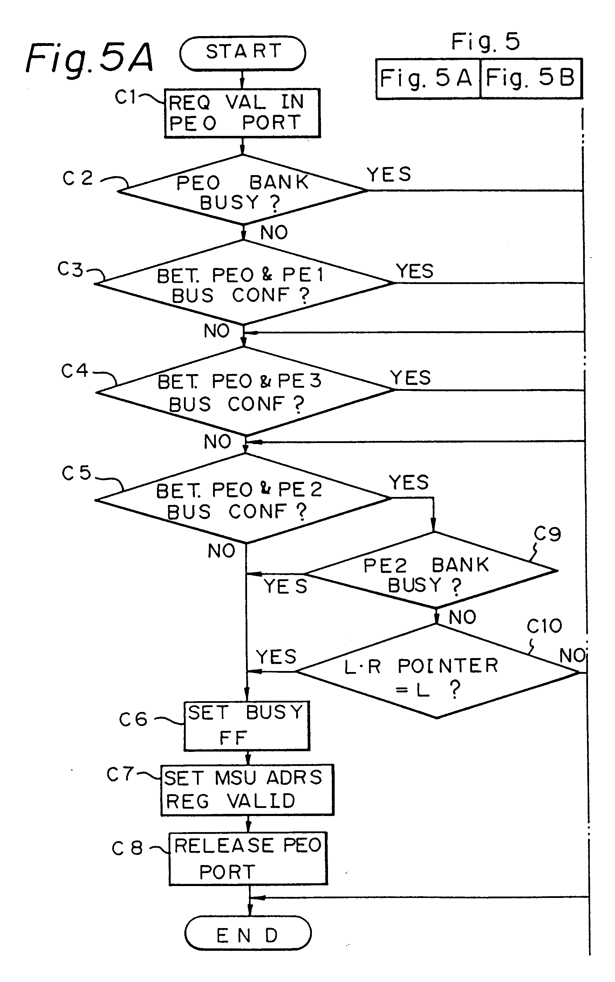

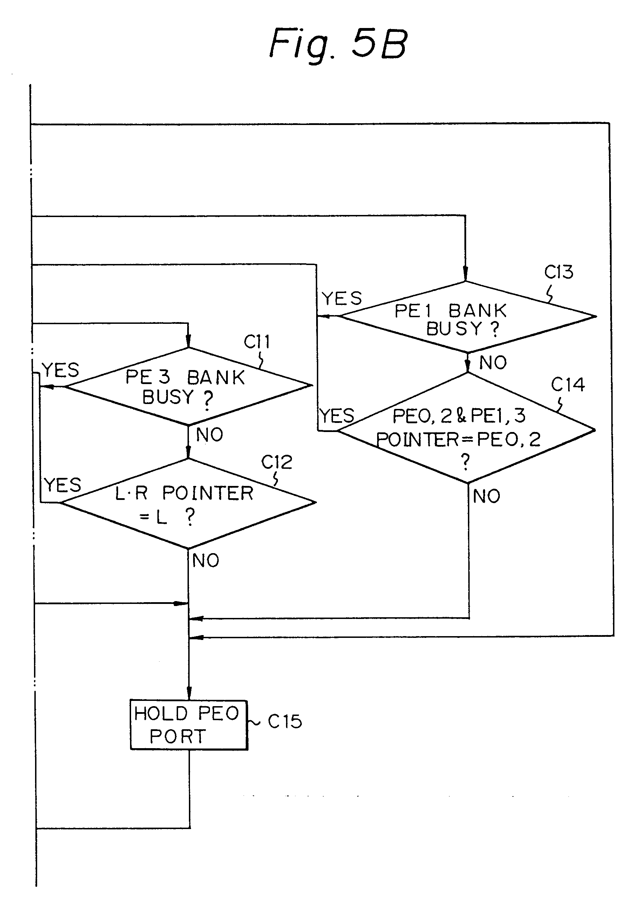

The preferred embodiments of the present invention are explained as follows, with reference to the accompanying drawings, wherein Figure 2 is a block circuit diagram of an embodiment of the present invention, Figure 3 shows an example of a format of a request in the embodiment of Fig. 2, Figure 4 shows a block circuit diagram of a priority order determination circuit in the embodiment of Fig. 2, and Figures 5A and 5B are a diagram explaining the control of a main priority order control circuit in Fig. 4.

The system shown in Fig. 2 comprises main storage units (MSU0, MSU1, MSU2, and MSU3) 10-0, 10-1, 10-2, and 10-3; main storage control units (MCU0 and MCU1) 11-0 and 11-1, which control the main storage units (MSU's); processing units or elements (PE0, PE1, PE2, and PE3) 17-0, 17-1, 17-2, and 17-3, wherein data is processed; and a control bus 16 through which requests are transmitted between the main storage control units (MCU's).

The MCU 11-0 comprises address registers (A-REG) 12-0, 12-1, 12-2, and 12-3, in which request information including address information for each MSU is set; a priority order determination circuit 13-0 wherein bank busy checks and bus conflict checks or the like are executed, and which determines the access priority order to the MSU; local request ports (LP0, LP1) 14-0 and 14-1 which receive requests from the PE's 17-0 and 17-1 belonging to the same MCU; and remote request ports (RP0, RP1) 15-0 and 15-1 which receive requests from the PE's 17-2 and 17-3 belonging to the other MCU 11-1.

The MCU 11-1 similarly comprises address registers (A-REG) 12-4, 12-5, 12-6, and 12-7; a priority order determination circuit 13-1; local request ports (LP0, LP1) 14-2 and 14-3; and remote request ports (RP0, RP1) 15-2 and 15-3, and the operation thereof is the same as that of the corresponding elements of the MCU 11-0.

The address registers 12-0, 12-1, 12-2, and 12-3 are connected to the MSU's 10-0, 10-1, 10-2, and 10-3, and to the priority order determination circuit 13-0. The local request ports 14-0 and 14-1 and the remote request ports 15-0 and 15-1 are connected to the priority order determination circuit 13-0. The PE 17-0 is connected to the local request port 14-0 and the remote request port 15-2, and the PE 17-1 is connected to the local request port 14-1 and the remote request port 15-3.

The address register 12-4, 12-5, 12-6, and 12-7 are connected to the MSU's 10-0, 10-1, 10-2, and 10-3, and to the priority order determination circuit 13-1. The local request ports 14-2 and 14-3 and the remote request ports 15-2 and 15-3 are connected to the priority order determination circuit 13-1. The PE 17-2 is connected to the local request port 14-2 and the remote request port 15-0, and the PE 17-3 is connected to the local request port 14-3 and the remote request port 15-1.

The connections between PE0 (17-0) and RP0 (15-2), between PE1 (17-1) and RP1 (15-3), between PE2 (17-2) and RP0 (15-0), and between PE3 (17-3) and RP1 (15-1) are made through the control bus 16.

When a request is sent from a PE for access to an MSU, the request information is always transmitted between the MCU's 11-0 and 11-1 through the control bus 16. For example, PE 17-0 supplies an access request to an MSU, and the request is set in the LP0 (14-0) and in the RP0 (15-2) through the control bus 16. The RP0 (15-2) in the MCU 11-1 corresponds to the LP0 (14-0) in the MCU 11-0. In addition, the local request ports 14-0 to 14-3 and the remote request ports 15-0 to 15-3 are arranged symmetrically to the MCU's 11-0 and 11-1, as shown in Fig. 2.

Accordingly, the priority order determination circuits 13-0 and 13-1 operate synchronously, and thus the two circuits carry out bank busy controls or the like, in exactly the same way.

The MCU's 11-0 and 11-1 are connected to the MSU's 10-0 to 10-3 by a request bus and a data bus and each MCU deals only with requests from the PE's which it controls, when handling a request transmission to the MSU and the connection of the data bus.

An example of the format of a request set in the LP's 14-0 to 14-3 and RP's 15-0 to 15-3 is shown in Fig. 3.

The first bit V is a valid bit showing a validity of the request, and the following address bits 0 to 29 designate an address of the MSU, i.e., the address of stored data to be accessed. The busy control utilizes the lower 9 bits in the MCU's 11-0 and 11-1.

The OPC (operation code) bits B₀ and B₁ designate the kind of MSU access operation, wherein "00" denotes an 8 bytes store, "01" denotes a block store, "10" denotes an 8 bytes fetch, and "11" denotes a block fetch.

The PTY (parity) bits B₀, B₁, B₂, B₃, and B₄ denote parity bits for portions of the address bit and the OPC.

Figure 4 shows the details of the priority order determination circuit shown in Fig. 2.

This priority order determination circuit comprises request queues 40, request ports 41, bank conflict checkers 42, a bus conflict checker 43, a main priority order control circuit 44, and MSU address registers 12.

The four request queues 40 receive request inputs LP0, LP1, RP0, and RP1 from the processing units PE0 to PE3. The request queues 40 comprise first-in-first-out (FIFO) type register groups, and the requests set in each FIFO are supplied to the request ports 41. The outputs from each request port 41 are transmitted to the bank conflict checkers 42 and a bus conflict checker 43. The bank is a unit of division in the MSU. The bank conflict checkers 42 check the bank busy states, and the bus conflict checker 43 checks the bus conflict state. Each bank conflict checker 42 is provided with a busy flag in each memory bank, to designate a busy or not busy state.

Each bank conflict checker 42 and the bus conflict checker 43 process the requests from the local PE's in the same way as the requests from the remote PE's.

The main priority order control circuit 44 controls access requests output to the MSU, based on the check result signals received from the bank conflict checker 42 and the bus conflict checker 43. Note, the request actually picked up in the main priority order control circuit 44 and output therefrom to the MSU address registers is that from a local PE0 or PE1, and the requests from the remote PE's are picked up but not output to the MSU address registers 12. When the check results from the bank conflict checker 42 and the bus conflict checker 43 show that access to the MSU is possible, a valid bit of the corresponding address register 12 in the MSU's 10-0 to 10-3 is turned "ON" and the access request is transmitted to the MSU.

Figures 5A and 5B are a flowchart of the control carried out by the main priority order control circuit 44 in Fig. 4.

First, control of the request from the local PE0 will be explained. Note the control of other requests is the same except that the requests for access to the MSU's are output or not output in accordance with whether they are local or remote.

### Control 1 (C1):

When the valid bit of the request is turned "ON" in the request port 41 corresponding to the local PE0, the bank busy and bus conflict checks are begun.

### Control 2 (C2):

If the bank to be accessed from the PE0 is busy, the request port of the PE0 is held in a waiting state by the control 15 (C15) until the bank is not busy.

### Control 3 (C3):

When the bank to be accessed from the PE0 is not busy, it is determined whether or not a bus conflict exists between the local PE0 and PE1. If a conflict exists, the procedure goes to C13 and a bank busy check is carried out for the PE1.

### Control 4 (C4):

Next, it is determined whether or not a bus conflict exists between the local PE0 and the remote PE3. If a conflict exists, the procedure goes to C11 and a bank busy check is carried out for the PE3.

### Control 5 (C5):

Here, it is determined whether or not a bus conflict exists between the local PE0 and the remote PE2. If a conflict exists, the procedure goes to C9 and a bank busy check is carried out for the PE2.

### Control 6 (C6):

If the request passes the bank busy check and the bus conflict check, the corresponding flip-flop (FF) indicating the busy state is set. The flip-flop is located in the bank conflict checker 42.

### Control 7 (C7):

The valid bit is turned "ON" in the address register 12 of the MSU to be accessed.

### Control 8 (C8):

Simultaneously, the valid bit of the request port of the PE0 currently turned "ON" is turned "OFF", and the request is released. The request port then waits for the next request.

### Control 9 (C9):

If a bank conflict exists between the remote PE2 and the local PE0, then it is determined whether or not the bank to be accessed from the PE2 is busy. If the result is positive the access request can be output, and thus the control 6 and the follow controls are executed.

### Control 10 (C10):

If the bank to be accessed from the PE2 is not busy, because the local and remote requests have been made simultaneously, only one of the requests can be given access, and this selection is made in this example by a pointer which points to the local side or the remote side, alternately. When the pointer is at the local side, the access request from the local side is executed, and when the pointer is at the remote side, the request is held by the C 15.

### Controls 11 and 12 (C11, C12):

As in the controls 9 and 10, it is determined whether or not access can be allowed in accordance with the busy or not busy state of the bank to be accessed from the remote PE3.

### Controls 13 and 14 (C13, C14):

As in the controls 9 and 10, it is determined whether or not access can be allowed in accordance with the busy or not busy state of the bank to be accessed from the local PE0. Here, when the bank to be accessed from the local PE1 is not busy, the priority between the PE0 and PE1 is determined by whether the pointer is on the PE0 side or on the PE1 side. Note, the priority may be determined in another way.

### Control 15 (C15):

When access cannot be given the request port concerned is held in a waiting state.

The above-description is of an example of the control according to this invention, and the sequence of the control timing or the like may be changed if desired.

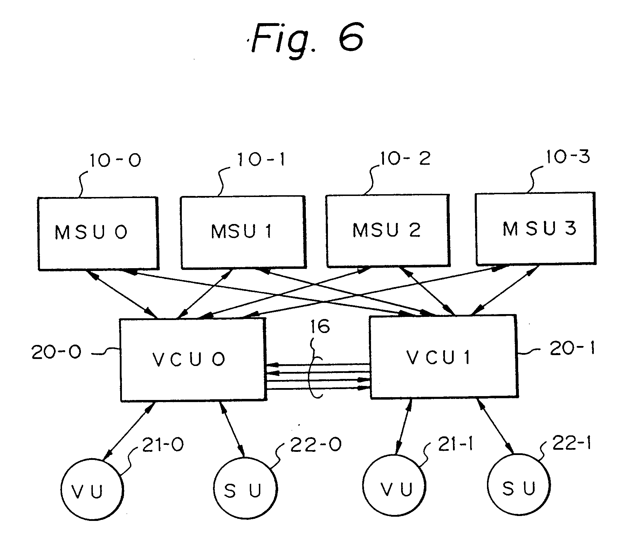

Figure 6 shows a more concrete example of the processing units and main storage control units. As shown in the Figure, the local processing units PE0 and PE1 and remote processing units PE2 and PE3 are replaced by (in the form of) a local vector processing unit (VU) 21-0, a local scalar processing unit (SU) 22-0, a remote vector processing unit (VU) 21-1, and a remote scalar processing unit (SU) 22-1, respectively. Further, the vector control units VCU0 (20-0) and VCU1 (20-1) are equivalent to the control units MCU0 and MCU1 of Fig.2, respectively.

Accordingly, in the bank conflict checker, L0 is replaced by LV (local vector), L1 by LS (local scalar), R0 by RV (remote vector), and R1 by RS (remote scalar). Further, as the inputs shown in Fig. 4, LP0 is replaced by a LOCAL VU, LP1 by a LOCAL SU, RP0 by a REMOTE VU, and RP1 by a REMOTE SU.

Accordingly, in the flowchart of Figs. 5A and 5B, PE0 is replaced by LVU, PE1 by LSU, PE2 by RVU, and PE3 by RSU, the PE0 and PE2 side becomes the V side and the PE1 and PE3 side becomes the S side, and therefore, the PE0, 2 & PE1, 3 POINTER is replaced by a V·S pointer.

In this embodiment, all requests are transmitted to all of the main storage control units through the control bus 16, and all the main storage control units control the bank busy check and the bus conflict check in exactly the same way. Therefore, each main storage control unit can independently process the request execution for a processing unit of a main storage control unit which it controls, and further, the busy state is indicated simultaneously in all main storage control units. The accessed data is transmitted to the processing unit directly through the main storage control unit which the MCU controls, and as a result, the control is greatly simplified. The plurality of main storage control units have the same constitution and each unit can be constructed by the same hardware.

In the above embodiment, an example of two main storage control units each having two processing units, and a further concrete example of two vector control units each having a vector processing unit and a scalar processing unit (ordinal computer) have been explained, but the above-explanation also applies where more than two main storage control units and more than two vector control units are used. Also, a different number of processing units can be constructed in the same way by merely changing the number of ports. Further, although in the above embodiments four main storage units are provided, the invention can be applied with a greater or fewer number of main storage units.

Thus, as explained above, an embodiment of the present invention can provide a multiprocessor control system wherein a request for access to a main storage unit is always transmitted among all main storage control units, and the access request control for a main storage unit is operated synchronously for each of the main storage control units.

## Claims

1. A multiprocessor memory access control system comprising a plurality of main storage control units (MCU0, MCU1; VCU0, VCU1), one of which is a first main storage control unit (MCU0, VCU0), and another of which is a second main storage control unit (MCU1, VCU1); a plurality of processing units (PE0 ... PE3; 21-0, 22-0, 21-1, 22-1), comprising one or more first processing units (PE0, PE1; 21-0, 22-0) that are connected to the first main storage control unit (MCU0, VCU0), and one or more second processing units (PE2, PE3; 21-1, 22-1) that are connected to the second main storage control unit (MCU1, VCU1); and at least one main storage unit (MSU0 ... MSU3) commonly connected to each of the main storage control units; wherein an access request from a said first processing unit (PE0, PE1; 21-0, 22-0) is carried out through the first main storage control unit (MCU0, VCU0) by accessing a selected said main storage unit (MSU0 ... MSU3) from the first main storage control unit, and an access request from a said second processing unit (PE2, PE3; 21-1, 22-1) is carried out through the second main storage control unit (MCU1, VCU1) by accessing a selected said main storage unit (MSU0 ... MSU3) from the second main storage control unit;
characterised by:-
a priority order determination circuit (13-0, 13-1) in each main storage control unit for determining the access priority order to the or each main storage unit (MSU0 ... MSU3);
the priority order determination circuits (13-0, 13-1) of both main storage control units receiving every said access request and checking the same synchronously to determine a priority of the access requests, and each main storage control unit carrying out an access request received from one of its own processing units only when permitted by its priority order determination circuit, thereby avoiding conflicting accesses.

2. A control system according to claim 1, wherein at least one of said processing units (21-0, 21-1) is a vector processing unit (VU).

3. A control system according to claim 1 or 2, wherein each priority order determination circuit comprises a plurality of bank conflict checkers (42) each corresponding to a respective one of said processing units and controlling use of the banks of a said main storage unit; a bus conflict checker (43) controlling common bus use; alternating pointer means used to determine the priority order in the case of a bank conflict between simultaneous access requests; and a main priority order control circuit (44) controlling a said storage unit upon receipt of the outputs of the bank conflict checker, the bus conflict checker, and the alternating pointer means.

4. A control system according to claim 1, 2 or 3, wherein said request for access to a selected said main storage unit comprises a valid bit designating a validity of the request, address bits for the main storage unit to be accessed, one or more operation code bits designating a kind of access operation, and one or more parity bits for the address bits and the operation code bits.

## Patentansprüche

1. Ein Mehrprozessorspeicherzugriffssteuersystem mit einer Vielzahl von Hauptspeichersteuereinheiten (MCU0, MCU1; VCU0, VCU1), von denen eine eine erste Hauptspeichersteuereinheit (MCU0, VCU0) und eine andere eine zweite Hauptspeichersteuereinheit (MCU1, VCU1) ist; einer Vielzahl von Verarbeitungseinheiten (PE0 ... PE3; 21-0, 22-0, 21-1, 22-1), die eine oder mehr erste Verarbeitungseinheiten (PE0, PE1; 21-0, 22-0) umfassen, die mit der ersten Hauptspeichersteuereinheit (MCU0, VCU0) verbunden sind, und eine oder mehr zweite Verarbeitungseinheiten (PE2, PE3; 21-1, 22-1), die mit der zweiten Hauptspeichersteuereinheit (MCU1, VCU1) verbunden sind; und wenigstens einer Hauptspeichereinheit (MSU0 ... MSU3), die gemeinsam mit jeder der Hauptspeichersteuereinheiten verbunden ist; bei dem eine Zugriffsanforderung von einer genannten ersten Verarbeitungseinheit (PE0, PE1; 21-0, 22-0) durch die erste Hauptspeichersteuereinheit (MCU0, VCU0) ausgeführt wird, indem auf eine ausgewählte genannte Hauptspeichereinheit (MSU0 ... MSU3) von der ersten Hauptspeichersteuereinheit zugegriffen wird, und eine Zugriffsanforderung von einer genannten zweiten Verarbeitungseinheit (PE2, PE3; 21-1, 22-1) durch die zweite Hauptspeichersteuereinheit (MCU1, VCU1) ausgeführt wird, indem auf eine ausgewählte genannte Hauptspeichereinheit (MSU0 ... MSU3) von der zweiten Hauptspeichersteuereinheit zugegriffen wird;
gekennzeichnet durch:-
eine Prioritätsreihenfolgebestimmungsschaltung (13-0, 13-1) in jeder Hauptspeichersteuereinheit, zum Bestimmen der Zugriffsprioritätsreihenfolge auf die oder jede Hauptspeichereinheit (MSU0 ... MSU3);
wobei die Prioritätsreihenfolgebestimmungsschaltungen (13-0, 13-1) von beiden Hauptspeichersteuereinheiten jede genannte Zugriffsanforderung empfangen und dieselbe synchron prüfen, um eine Priorität der Zugriffsanforderungen zu bestimmen, und jede Hauptspeichersteuereinheit eine Zugriffsanforderung, die sie von einer ihrer eigenen Verarbeitungseinheiten empfing, nur ausführt, wenn sie durch ihre Prioritätsreihenfolgebestimmungsschaltung gestattet wurde, wodurch Konfliktzugriffe vermieden werden.

2. Ein Steuersystem nach Anspruch 1, bei dem wenigstens eine der genannten Verarbeitungseinheiten (21-0, 21-1) eine Vektorverarbeitungseinheit (VU) ist.

3. Ein Steuersystem nach Anspruch 1 oder 2, bei dem jede Prioritätsreihenfolgebestimmungsschaltung eine Vielzahl von Bankkonfliktprüfern (42) umfaßt, die jeweils einer entsprechenden der genannten Verarbeitungseinheiten entsprechen und die Nutzung der Bänke einer genannten Hauptspeichereinheit steuern; einen Buskonfliktprüfer (43), der die gemeinsame Busnutzung steuert; ein alternierendes Zeigermittel, das verwendet wird, um die Prioritätsreihenfolge im Fall eines Bankkonfliktes zwischen gleichzeitigen Zugriffsanforderungen zu bestimmen; und eine Hauptprioritätsreihenfolgesteuerschaltung (44), die eine genannte Speichereinheit bei Empfang der Ausgaben des Bankkonfliktprüfers, des Buskonfliktprüfers und des alternierenden Zeigermittels steuert.

4. Ein Steuersystem nach Anspruch 1, 2 oder 3, bei dem die genannte Anforderung des Zugriffs auf eine ausgewählte genannte Hauptspeichereinheit ein gültiges Bit umfaßt, das eine Gültigkeit der Anforderung bezeichnet, Adreßbits für die Hauptspeichereinheit, auf die zuzugreifen ist, ein oder mehr Operationscodebits, die eine Art der Zugriffsoperation bezeichnen, und ein oder mehr Paritätsbits für die Adreßbits und die Operationscodebits.

## Revendications

1. Système de contrôle d'accès en mémoire de système multiprocesseur comprenant une pluralité d'unités de contrôle de mémoire centrale (MCU0,MCU1;VCU0,VCU1) dont l'une est une première unité de contrôle de mémoire centrale (MCU0,VCU0) et l'autre est une deuxième unité de contrôle de mémoire centrale (MCU1,VCU1); une pluralité d'unités de traitement (PE0,...,PE3; 21-0,22-0, 21-1,22-1), comprenant une ou plusieurs premières unités de traitement (PE0,PE1;21-0,22-0) qui sont connectées à la première unité de contrôle de mémoire centrale (MCU0, VCU0), et une ou plusieurs deuxièmes unités de traitement (PE2,PE3;21-1,22-1) qui sont connectées à la deuxième unité de contrôle de mémoire centrale (MCU1,VCU1); et au moins une unité de mémoire centrale (MSU0,...,MSU3) connectée en commun à chacune des unités de contrôle de mémoire centrale; dans lequel une demande d'accès provenant d'unedite première unité de traitement (PE0,PE1; 21-0,22-0) est prise en charge par la première unité de contrôle de mémoire centrale (MCU0,VCU0) par un accès à unedite unité de mémoire centrale sélectionnée (MSU0,...,MSU3) à partir de la première unité de contrôle de mémoire centrale, et une demande d'accès provenant d'unedite deuxième unité de traitement (PE2,PE3;21-1,22-1) est prise en charge par la deuxième unité de contrôle de mémoire centrale (MCU1,VCU1) par un accès à unedite unité de mémoire centrale sélectionnée (MSU0,...,MSU3) à partir de la deuxième unité de contrôle de mémoire centrale;
caractérisé par:
un circuit de détermination d'un ordre de priorité (13-0,13-1) dans chaque unité de contrôle de mémoire centrale pour déterminer l'ordre de priorité d'accès à la ou à chaque unité de mémoire centrale (MSU0,...,MSU3);
les circuits de détermination d'un ordre de priorité (13-0,13-1) des deux unités de contrôle de mémoire centrale recevant chaquedite demande d'accès et contrôlant celle-ci en synchronisme pour déterminer une priorité des demandes d'accès, et chaque unité de contrôle de mémoire centrale prenant en charge une demande d'accès reçue d'une de ses propres unités de traitement uniquement quand c'est autorisé par son circuit de détermination d'un ordre de priorité, ce qui évite des accès incompatibles.

2. Système de contrôle selon la revendication 1, dans lequel au moins une desdites unités de traitement (21-0,21-1) est une unité de traitement vectoriel (VU).

3. Système de contrôle selon l'une quelconque des revendications 1 et 2, dans lequel chaque circuit de détermination d'un ordre de priorité comprend une pluralité de circuits de contrôle d'incompatibilité de bloc (42) correspondant chacun à une unité respective desdites unités de traitement et contrôlant la mise en oeuvre des blocs d'unedite unité de mémoire centrale; un circuit de contrôle d'incompatibilité de bus (43) contrôlant la mise en oeuvre du bus commun; un moyen indicateur alternatif servant à déterminer l'ordre de priorité dans le cas d'une imcompatibilité de bloc entre les demandes d'accès simultanées; et un circuit de contrôle d'ordre de priorité principal (44) contrôlant unedite unité de mémoire à la réception des signaux de sortie du circuit de contrôle d'incompatibilité de bloc, du circuit de contrôle d'incompatibilité de bus, et du moyen indicateur alternatif.

4. Système de contrôle selon l'une quelconque des revendications 1 à 3, dans lequel ladite demande d'accès à unedite unité de mémoire centrale sélectionnée comprend un bit de validité indiquant la validité de la demande, des bits d'adresse pour l'unité de mémoire centrale à laquelle un accès doit être exécuté, un ou plusieurs bits de code opération indiquant un type d'opération d'accès,et un ou plusieurs bits de parité pour les bits d'adresse et les bits de code opération.
